# EUROPEAN PATENT SPECIFICATION

(11) **EP 2 183 301 B1**
(45) Date of publication and mention of the grant of the patent: **07.10.2015**
(21) Application number: 08795085.3
(22) Date of filing: 07.08.2008
(51) Int. Cl.: C08G 77/46, C08J 9/04

(54) **SILICONE COPOLYMER SURFACTANTS FOR USE IN POLYURETHANE FOAMS**
SILIKONCOPOLYMER-TENSIDE ZUR VERWENDUNG IN POLYURETHANSCHAUMSTOFFEN
TENSIOACTIFS EN COPOLYMÈRE DE SILICONE POUR UNE UTILISATION DANS DES MOUSSES DE POLYURÉTHANE

(30) Priority: 10.08.2007 US 964237 P
(43) Date of publication of application: 12.05.2010
(73) Proprietor: Momentive Performance Materials Inc., Waterford, NY 12188 (US)
(72) Inventor: WILLOUGHBY, Kenneth, Lloyd, Parkersburg, WV 26104 (US); DAVIS, David, Saint Marys, WV 26170 (US); LO, Peter, Parkersburg, WV 26104 (US)
(74) Representative: Laufhütte, Dieter
(86) International application number: PCT/US2008/009461
(87) International publication number: WO 2009/023116

(56) References cited:
- US-A- 4 529 743
- US-A- 5 145 879
- US-A- 5 981 613

## Description

### BACKGROUND OF THE INVENTION

The present invention relates to novel silicone copolymer surfactant, methods for making the surfactant and a process for preparing polyurethane foams.

In today's current polyurethane technology silicone surfactants are used to assist and control nucleation sites for cell formation, compatibilization of the chemical components and stabilization of cells in the developing polyurethane foam.

One of the many chemical components that must be compatiblized in a polyurethane foam-forming composition is the blowing agent. Typical blowing agents include, e.g., water, fluorocarbons, hydrochlorofluorcarbons, hydroflurorcarbons, hydrocarbons, methyl formate and/or various blends of these, which are used to provide expansion in the foaming process. These blowing agents possess varying levels of solubility or compatibility with the other components used in the formation of polyurethane foams. Developing and maintaining a good emulsification when using components with poor compatibility is critical to processing and achieving acceptable polyurethane foam quality.

Currently silicone surfactants are used to emulsify, nucleate and stabilize the polyurethane foam This is well known in the literature. The silicone surfactants currently used today for a variety of applications, contain for example, either all ethylene oxide polyether pendants reacted to the siloxane copolymer backbone or all ethylene oxide / propylene oxide pendants.

The present invention provides new silicone surfactants and addresses the problem of incompatibility of polyurethane foam-forming components, with resultant improvements in emulsification and duration of the emulsion of the foam-forming components.

US 4,529,743 A, US 5,981,613 A and US 5,145,879 A disclose polysiloxane-polyoxyalkylene block copolymers useful as surfactants in PU-foam forming compositions.

### SUMMARY OF THE INVENTION

The present invention provides a silicone copolymer surfactant comprising the formula:

M*DₓD*_{y}*D**_{z}M*

wherein:
M* is [R¹O(CH(CH₃)CH₂O)ₘ(CH₂CH₂O)ₙR²-]ₐ[CH₃-]₃₋ₐSiO_{1/2}
D is (CH₃)₂SiO_{2/2}
D* is [R³O(CH₂CH₂O)ₒR⁴-][CH₃]SiO_{2/2}
D** is [R⁵O(CH(CH₃)CH₂O)ₚ(CH₂CH₂O)_{q}R⁶-][CH₃-]SiO_{2/2}
each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
each occurrence of R², R⁴ and R⁶ is a divalent hydrocarbon containing from 1 to 12 carbon atoms;
each occurrence of a, m, n, o, p, q, x, y and z is independently a is 0 to 1; m is 0 to 200; n is 0 to 200; o is 1 to 200; p is 1 to 200; q is 1 to 200; x is 1 to 100; y is 1 to 50 and z is 1 to 50, with the proviso that at least one R³ and at least one R⁵ is hydrogen.

The present invention provides a polyurethane-foam forming composition comprising:
a) at least one polyol;
b) at least one polyisocyanate;
c) at least one polyurethane catalyst;
d) at least one blowing agent;
e) an emulsifying amount of at least one silicone copolymer having the formula:

   M*DₓD*_{y}*D**_{z}M*

   wherein:
   M* is [R¹O(CH(CH₃)CH₂O)ₘ(CH₂CH₂O)ₙR²-]ₐ[CH₃-]₃₋ₐSiO_{1/2}
   D is (CH₃)₂SiO_{2/2}
   D* is [R³O(CH₂CH₂O)ₒR⁴-][CH₃]SiO_{2/2}
   D** is [R⁵O(CH(CH₃)CH₂O)ₚ(CH₂CH₂O)_{q}R⁶-][CH₃-]SiO_{2/2}
   each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
   each occurrence of R², R⁴ and R⁶ is a divalent hydrocarbon containing from 1 to 12 carbon atoms;
   each occurrence of a, m, n, o, p, q, x, y and z is independently a is 0 to 1; m is 0 to 200; n is 0 to 200; o is 1 to 200; p is 1 to 200; q is 1 to 200; x is 1 to 100; y is 1 to 50 and z is 1 to 50, with the proviso that at least one R³ and at least one R⁵ is hydrogen;
f) optionally, at least one additional component selected from the group consisting of other polymer and/or copolymer, chain extender, crosslinker, non-aqueous blowing agent, filler, reinforcement, pigment, tint, dye, colorant, flame retardant, antioxidant, antiozonant, UV stabilizer, anti-static agent, biocide and biostat.

Also provided is a process for manufacturing a polyurethane foam comprising the step of reacting at least one polyol with at least one polyisocyanate and emulsifying amount of at least one silicone copolymer surfactant having the general formula:

M*DₓD*_{y}*D**_{z}M*

wherein:
M* is [R¹O(CH(CH₃)CH₂O)ₘ(CH₂CH₂O)ₙR²-]ₐ[CH₃-]₃₋ₐSiO_{1/2}
D is (CH₃)₂SiO_{2/2}
D* is [R³O(CH₂CH₂O)ₒR⁴-][CH₃]SiO_{2/2}
D** is [R⁵O(CH(CH₃)CH₂O)ₚ(CH₂CH₂O)_{q}R⁶-][CH₃-]SiO_{2/2}
each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
each occurrence of R², R⁴ and R⁶ is a divalent hydrocarbon containing from 1 to 12 carbon atoms;
each occurrence of a, m, n, o, p, q, x, y and z is independently a is 0 to 1; m is 0 to 200; n is 0 to 200; o is 1 to 200; p is 1 to 200; q is 1 to 200; x is 1 to 100; y is 1 to 50 and z is 1 to 50, with the proviso that at least one R³ and at least one R⁵ is hydrogen, in the presence of a blowing agent and under conditions sufficient to form the polyurethane foam.

The emulsifying performance of the silicone copolymer surfactants of the present invention provides improved cell stabilization, component emulsification and prolonged processing times for polyurethane foam-forming compositions.

### BRIEF DESCRIPTION OF THE DRAWINGS

Figure 1 is a graphic representation of the time to achieve a homogeneous emulsion of Comparative Example 3 and 4 and Example 2.
Figure 2 is a graphic representation of the time to phase separation of Comparative Example 3 and 4 and Example 2.

### DETAILED DESCRIPTION OF THE INVENTION

According to one embodiment of the invention, the present invention provides silicone polyether copolymer surfactants possessing enhanced emulsification properties which provide prolonged processing times for polyurethane foam-forming compositions. According to another embodiment, the present invention provides methods for making silicone polyether copolymer surfactants possessing enhanced emulsification properties in polyurethane foam-forming compositions. In still another embodiment of the invention, a polyurethane-foam-forming composition comprising an emulsifying amount of silicone polyether copolymer surfactants is provided.

The silicone polyether copolymer surfactants of the present invention possess a mixture of pendant groups consisting of at least one pendant hydroxyl-terminated polyether group bonded to the silicon atom through a silicon-carbon bond and containing at least one repeat unit derivable from ethylene oxide monomer and at least one pendant hydroxyl-terminated polyether group bonded to the silicon atom through a silicon-carbon bond and containing at least one repeat unit derivable from ethylene oxide and at least one repeat unit derivable from propylene oxide, attached to the same siloxane backbone. The novel surfactants are useful in emulsifying the materials used to manufacture polyurethane foam.

Enhanced emulsification is a desirable effect for the processing of urethane foams, in particular rigid polyurethane foam. The enhanced emulsification provides for prolonged processing times and improved final foam products. Furthermore, improved emulsification can result in the uniform distribution of blowing agents throughout the polyurethane foam, resulting in a fine regular cell structure.

According to an embodiment of the invention, the structure of the silicone copolymer surfactant of the invention is:

M*DₓD*_{y}*D**_{z}M*

wherein:
M* is [R¹O(CH(CH₃)CH₂O)ₘ(CH₂CH₂O)ₙR²-]ₐ[CH₃-]₃₋ₐSiO_{1/2}
D is (CH₃)₂SiO_{2/2}
D* is [R³O(CH₂CH₂O)ₒR⁴-][CH₃]SiO_{2/2}
D** is [R⁵O(CH(CH₃)CH₂O)ₚ(CH₂CH₂O)_{q}R⁶-][CH₃-]SiO_{2/2}
each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
each occurrence of R², R⁴ and R⁶ is a divalent hydrocarbon containing from 1 to 12 carbon atoms;
each occurrence of a, m, n, o, p, q, x, y and z is independently a is 0 to 1; m is 0 to 200; n is 0 to 200; o is 1 to 200; p is 1 to 200; q is 1 to 200; x is 1 to 100; y is 1 to 50 and z is 1 to 50, with the proviso that at least one R³ and at least one R⁵ is hydrogen.

In one embodiment, the each occurrence of R¹, R³ and R⁵ is independently selected from the group consisting of hydrogen, monovalent alkyl, aryl, alkenyl, or aralkyl group of from 1 to 12 carbon atoms. Representative non-limiting examples include hydrogen, methyl, ethyl, propyl, isopropyl butyl, allyl, phenyl, benzyl and the like.

In another embodiment, each occurrence of R², R⁴ and R⁶ is independently a divalent alkylene, arylene, and aralkylene group containing from 1 to 12 carbon atoms. Representative non-limiting examples include methylene, ethylene, propylene, isopropylene, butylene, isobutylene, phenylene, xylylene, and the like.

The polyether chain of M* (when a is 1) and D** can be composed to random distribution of the oxyethylene and oxypropylene repeat units, blocks of oxyethylene and blocks of oxypropylene repeat units or combinations thereof.

In a specific embodiment, each occurrence of R³ and R⁵ is independently hydrogen; each occurrence of R², R⁴ and R⁶ is a divalent alkylene containing 1 to 12 carbon atoms, preferably from 2 to 6 carbon atoms, more preferably from 3 to 4 carbon atoms and most preferably 3 carbon atoms; a is 0 to 1 and preferably 0; o is 1 to 200, preferably 3 to 50, more preferably from 5 to 25 and most preferably from 10 to 15; p is 1 to 200, preferably from 3 to 100, more preferably from 5 to 50 and most preferably from 15 to 35; q is 1 to 200, preferably from 3 to 100, more preferably from 5 to 50 and most preferably from 15 to 35; x is 1 to 100, preferably from 10 to 85, more preferably from 25 to 75 and most preferably from 50 to 70; y is 1 to 50, preferably 1 to 25, more preferably 1 to 10 and most preferably 2 to 4; and z is 1 to 50, preferably 1 to 25, more preferably 1 to 10 and most preferably 2 to 4.

In another specific embodiment, each occurrence of R³ and R⁵ is independently hydrogen; each occurrence of R², R⁴ and R⁶ is a divalent alkylene containing 3 to 4 carbon atoms; a is 0; o is 10 to 15; p is 15 to 35; q is from 15 to 35; x is 25 to 75; y is 1 to 10; and z is 1 to 10.

In still another embodiment, each occurrence of R³ and R⁵ is independently hydrogen; each occurrence of R², R⁴ and R⁶ is a propylene; a is 0, o is 10 to 15; p is 15 to 35; q is 15 to 35; x is 50 to 75; y is 1 to 10 and z is 1 to 10.

In yet another embodiment, each occurrence of R³ and R⁵ is independently hydrogen and the molar ratio of y/z is from 1 /10 to 10/1; more preferably from 1/5 to 5/1; and most preferably from 1/2 to 2/1.

Accordingly, the silicone copolymer surfactants of the present invention can be prepared by several synthetic approaches including staged addition of the polyethers. Moreover, the polyoxyalkylene polyether components are well known in the art and/or can be produced by any conventional process. For instance, hydroxy terminated polyoxyalkylene polyethers which are convenient starting materials in the preparation of the terpolymer can be prepared by reacting a suitable alcohol with ethylene oxide and propylene oxide (1,2-propylene oxide) to produce the copolymer, or with ethylene oxide alone to produce the polyoxyethylene ether. Suitable alcohols are, e.g. methanol, ethanol, propanol, isopropanol, butanol, tertiary butanol, and the like; and hydroxy alkenyl compounds, e.g., allyl alcohol, methallyl alcohol and the like. In general the alcohol starter preferably is placed in an autoclave or other high-pressure vessel along with catalytic amounts of a suitable catalyst, such as sodium hydroxide, potassium hydroxide, other alkali metal hydroxides, or sodium or other alkali metals. Further details of preparation are set forth in, for example, U.S. Pat. No. 3,980688.

The above-described alcohol-oxide reaction produces a monohydroxy end-blocked polyoxyalkylene polyether in which the other end-blocking group is an alkoxy, aryloxy, or alkenyloxy radical. These polyethers may be converted to monoalkenyloxy-terminated polyoxyalkylene polyethers by capping the hydroxy terminal group of said monohydroxy end-blocked poly(oxyethyleneoxypropylene) copolymers and/or poly(oxyethylene) copolymers by any conventional means.

The method of producing the novel polysiloxane-polyoxyalkylene block terpolymers of this invention can be conducted in the same manner as any conventional known method for producing polysiloxane polyoxyalkylene block copolymers such as described, e.g. in U.S. Patent Nos. 2,834,748, 2,920,1150 and 3,801,616. Such conventional methods have been described above. Production of these compositions involve the common chemical reactions of reacting, for instance, a polyoxyalkylene polyether with a polysiloxane containing silanic hydrogen at elevated temperatures, e.g., from about 60° C to about 140° C in the presence of a catalyst such as platinum catalysts (e.g., chloroplatinic acid), and the like and optionally in the presence of a solvent (e.g., liquid hydrocarbons, such as isopropyl alcohol and the like) for the polyoxyalkylene polyether and polysiloxane reactants. The usual conventional amounts of components and reaction conditions can be employed and such is well within the knowledge of one skilled in the art. For instance, approximately stoichiometric amounts of slightly higher polyalklylene polyethers and the functional polysiloxane reactants are preferred, while the amount of the catalyst need obviously only is a catalytic amount. The temperatures of the reaction, of course, depend largely on the reactants involved and the desired polysiloxane-polyoxyalkylene block terpolymer.

Of course, it is to be understood that the polysiloxane-polyoxyalkylene block copolymers of this invention can contain small amounts of other siloxy units, e.g. SiH groups (owing to incomplete reaction thereof with the polyoxyalkylene reactant and/or Si-alkoxy or Si-OH groups owing to incomplete hydrolysis and condensation of the silanes used to produce the siloxane reactant, as disclosed in U.S. Patent No. 4,814,409.

According to one specific embodiment, the silicone copolymer surfactant of the invention is obtained by reacting at least one poly(oxyethyleneoxypropylene) polyether and at least one poly(oxyethylene) polyether each of the polyethers possessing a single terminal olefinic group with a hydrosiloxane possessing two terminal SiH groups and no SiH group in the backbone thereof under hydrosilation reaction conditions, the ratio of olefinic groups to SiH groups ranging from 1.0 to 1.3, and preferably from 1.0 to 1.1, and optionally, end-capping a terminal hydroxyl group of the resulting terminally ethylenically unsaturated polyether.

According to another specific embodiment, the silicone copolymer surfactant of the invention is obtained by reacting at least one poly(oxyethyleneoxypropylene) polyether and at least one poly(oxyethylene) polyether each of the polyethers possessing a single terminal olefinic group and a single hydroxyl group with a hydrosiloxane possessing at least two pendent SiH groups under hydrosilation reaction conditions, the ratio of olefinic groups to SiH groups ranging from 1.0 to 1.3, and preferably from 1.0 to 1.1, and optionally, end-capping a terminal hydroxyl group of the resulting terminally ethylenically unsaturated polyether.

According to an embodiment of the invention a polyurethane-foam forming composition is provides which comprises:
a) at least one polyol;
b) at least one polyisocyanate;
c) at least one polyurethane catalyst;
d) at least one blowing agent;
e) an emulsifying amount of at least one silicone copolymer having the formula:

   M*DₓD*_{y}*D**_{z}M*

   wherein:
   M* is [R¹O(CH(CH₃)CH₂O)ₘ(CH₂CH₂O)ₙR²-]ₐ[CH₃-]₃₋ₐSiO_{1/2}
   D is (CH₃)₂SiO_{2/2}
   D* is [R³O(CH₂CH₂O)ₒR⁴-][CH₃]SiO_{2/2}
   D** is [R⁵O(CH(CH₃)CH₂O)ₚ(CH₂CH₂O)_{q}R⁶-][CH₃-]SiO_{2/2}
   each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
   each occurrence of R², R⁴ and R⁶ is a divalent hydrocarbon containing from 1 to 12 carbon atoms;
   each occurrence of a, m, n, o, p, q, x, y and z is independently a is 0 to 1; m is 0 to 200; n is 0 to 200; o is 1 to 200; p is 1 to 200; q is 1 to 200; x is 1 to 100; y is 1 to 50 and z is 1 to 50, with the proviso that at least one R³ and at least one R⁵ is hydrogen.

According to an embodiment of the invention, the polyurethane-foam forming composition optionally comprises, at least one additional component, component (f), selected from the group consisting of other polymer and/or copolymer, chain extender, crosslinker, non-aqueous blowing agent, filler, reinforcement, pigment, tint, dye, colorant, flame retardant, antioxidant, antiozonant, UV stabilizer, anti-static agent, biocide and biostat.

Among the suitable polyols (a) for preparing the polyurethane foam of the present invention are those having 2 to 8 hydroxyl groups per molecule and a weight average molecular weight of from 100 to 2000, preferably a weight average molecular weight of from 400 to 1200. Included among the useful polyols are polyether diols and triols, polyester diols and triols and hydroxyl-terminated polyolefin polyols such as the polybutadiene diols. Other useful polyols include copolymers of polymeric materials grafted onto the main polyol chain such as, for example, SAN (styrene/acrylonitrile) or AN (acrylonitrile) grafted onto polyether polyols, commonly referred to as copolymer polyols, polyols derived from naturally occurring materials such as castor oil, chemically-modified soybean oil or other chemically-modified fatty acid oils and polyols resulting from the alkoxylation of such naturally occurring materials as castor oil and soybean.

Preferred polyols (a) are the polyether diols and triols, particularly those derived from one or more alkylene oxides, phenyl-substituted alkylene oxides, phenyl-substituted alkylene oxides and/or ring-opening cyclic ethers such as ethylene oxide, propylene oxide, styrene oxide, tetrahydrofuran, and the like, advantageously having a weight average molecular weight of from 100 to 2000 and preferably a weight average molecular weight from 400 to 1200. Examples of such polyether diols include, for example, Pluracol P410R (Pluracol is a registered trademark of BASF).

Suitable polyisocyanates (b) include, for example, methylenediphenylenediisocyanate (MDI) including 4,4' and 2,4' isomers and polymeric forms of MDI often referred to as polymeric MDI. Isocyanate prepolymers of MDI made from the reaction of MDI with polyols; modified versions of such as uretonimine-modified MDI; and combinations in any proportions of MDI variants named above. Suitable toluenediisocyanate (TDI), including 2,4 and 2,6 isomers and isocyanate prepolymers of TDI made from the reaction of TDI with polyols, or other aromatic or aliphatic isocyanates and modified versions including uretonimine-modification and prepolymers of these isocyanates can be used in the invention.

Catalyst(s) (c) include alkali metal carboxylates such as potassium octoate, potassium acetate, sodium acetate and sodium octoate, heavy metal-based catalysts such as those of mercury or lead, tertiary amine urethane catalysts such as N, N, N', N", N"-pentamethyldiethylenetriamine, e.g. Niax C-5 and quaternary ammonium salt catalysts such as quaternary ammonium carboxylate. Other useful urethane catalysts(c) include foam-forming organometallic catalysts such as nickelacetoacetonate, ironacetoacetonate, tin-based catalysts bismuth-based catalysts and zinc-based catalysts.

One or more blowing agents (d), either of the physical and/or chemical type, can be included in the reaction mixture. Typical physical blowing agents include, e.g., fluorocarbons, hydrochlorofluorocarbons, hydrofluorocarbons, hydrocarbons, methyl formate and/or various blends of these, which are used to provide expansion in the foaming process. A typical chemical blowing agent is water, which reacts with isocyanates in the foam, forming reaction mixture to produce carbon dioxide gas. These blowing agents possess varying levels of solubility or compatibility with the other components used in the formation of polyurethane foams. Developing and maintaining a good emulsification when using components with poor compatibility is critical to processing and achieving acceptable polyurethane foam quality.

The siloxane-polyoxyalkylene copolymer surfactant of the present invention comprises at least one ethylene oxide pendant and at least one ethylene oxide/propylene oxide pendant group and those possessing hydroxy functionality (i.e., uncapped) are incorporated into the polyurethane foam system. Accordingly, the siloxane copolymer surfactants that are "capped," for example, with methoxy or acetoxy groups, do not react into the polyurethane system.

According to one embodiment, the total amount of surfactant is between 0.1 weight percent and 2.0 weight percent of the total polyurethane formulation. According to another embodiment, the total amount of surfactant is between 0.5 weight percent and 1.5 weight percent of the total polyurethane formulation. According to yet another embodiment, the total amount of surfactant is between 0.75 weight percent and 1.25 weight percent of the total polyurethane formulation. The polyurethane polymer system of the invention also comprises a polyol component, an isocyanate component, a blowing agent, polyurethane catalyst and other typical polyurethane foam additives.

The amounts of polyol(s) (a), polyisocyanate(s)(b), catalyst(s) (c), blowing agent(s) (d) and silicone copolymer surfactant(s)(e) employed in the polyurethane foam-forming reaction medium herein can vary over fairly wide limits, e.g., as set forth in the following table:

| Component of the Polyurethane Foam-forming Reaction Medium | Broad Range | Preferred Range |
|---|---|---|
| Polyol(s) (a), e.g., polyether diols, triols, etc. | 100 | 100 |
| Polyisocyanate(s)(b), e.g., diisocyanate | 30-400 | 40-350 |
| Catalyst(s) (c), e.g., tertiary amines, tins, etc | 0.01 - 5 | 0.02 - 2 |
| Blowing agent(s) (d) | 0.01-10 | 0-8 |
| Silicone copolymer surfactant(s) (e) | 0.1-10 | 0.5-5 |

| | | |
|---|---|---|
| Ranges in pphp (parts per 100 parts polyol by weight | | |

Optional components(s) (f) include any of those known in the art in known amounts and include other polyhydroxyl-terminated materials such as those having 2 to 8 hydroxyl groups per molecule and a molecular weight from 62 to 500 that function as crosslinkers or chain extenders. Examples of useful chain extenders having two hydroxyl groups include dipropylene glycol, diethylene glycol, 1,4-butanediol, ethylene glycol, 2,3-butanediol and neopentylglycol. Crosslinkers having 3 to 8 hydroxyl groups include glycerine, pentaerythritol, mannitol, and the like.

Other optional (f) component(s) are known in the art and include fillers, e.g., inorganic fillers or combinations of fillers. Fillers may include those for density modification, physical property improvements such as mechanical properties or sound absorption, fire retardancy or other benefits including those that may involve improved economics such as, for example, calcium carbonate or other fillers that reduce the cost of manufactured foam, aluminum trihydrate or other fire retardant fillers, barium sulfate or other high-density filler that is used for sound absorption, microspheres of materials such as glass or polymers that may also further reduce foam density. Fillers of high aspect ratio that are used to modify mechanical properties such as foam stiffness or flexural modulus that would include: man-made fibers such as milled glass fiber or graphite fiber; natural mineral fibers such as wollastonite; natural animal such as wool or plant fibers such as cotton; man-made plate-like fillers such as shattered glass; natural mineral plate-like fillers such as mica; possible addition of any pigments, tints or colorants. Additionally, the invention contemplates the use of organic flame retardants; antiozonants, antioxidants; thermal or thermal-oxidative degradation inhibitors, UV stabilizers, UV absorbers or any other additive(s) that when added to the foam-forming composition will prevent or inhibit thermal, light, and/or chemical degradation of the resulting foam. Also contemplated for use herein are any of the known and conventional biostatic agents, antimicrobial agents and gas-fade inhibiting agents.

### EXAMPLES

### Example 1

### Preparation of silicone surfactant

Into a 500 mL round bottom flask equipped with a mechanical stirrer and dry nitrogen line, were charged allyl-terminated polyethylene glycol (58.5 grams, 0.117 mole of APEG 550 from Dow Chemical), allyl-terminated poly(oxyethyleneoxypropylene)glycol (117.8 grams, 0.030 mole of 40HA2700 from Dow Chemical) and tributyl amine (0.05 gram, 0.0005 mole). The mixture was stirred. The Si-H fluid, (CH₃)₃SiO[(CH₃)₂SiO]₆₅[CH₃SiHO]₇Si(CH₃)₃, (73.7 grams, 0.014 mole) was added and the mixture heated to 85°C with stirring. The catalyst, chloroplatinic acid, (3.3% chloroplatinic acid in isopropanol, 0.36 mL) was added and the mixture heated to a maximum temperature of 103°C and heated for 35 minutes. The mixture was cooled to room temperature to yield 250 grams of silicone surfactant.

### Example 2 and Comparative Examples 3 and 4

Polyurethane foam-forming compositions were prepared with the formulation presented in Table 1. The polyurethane foam-forming compositions were prepared with the following silicone surfactants: Example 2 which contained a silicone copolymer surfactant having both ethylene oxide (EO) and ethylene oxide/propylene oxide(EO/PO) pendant groups prepared in Example 1; Comparative Example 3 which contained a silicone copolymer surfactant having EO/PO pendant groups only; and Comparative Example 4 which contained a silicone copolymer surfactant having propylene oxide (PO) pendant groups only. The polyurethane foam-forming composition contained typical use levels of silicone. The Example and Comparative Examples were used to determine the effect of the silicone surfactant copolymer on emulsion quality and duration.

**TABLE 1**

| Material | pphp |
|---|---|
| *Terate^{®} 3512 | 100.00 |
| Water | 1.00 |
| Flame Retardant | 10.00 |
| Potassium Octoate | 2.25 |
| Potassium Acetate | 1.00 |
| **Niax^{®} C-5 | 0.37 |
| Silicone | 2.50 |
| N-pentane | 21.00 |
| | |
| MDI | 225.00 |
| Index | 250 |

| | |
|---|---|
| *Terate® is a trademark of INVISTA S.à.r.l. **Niax® is a trademark of Momentive Performance Materials. | |

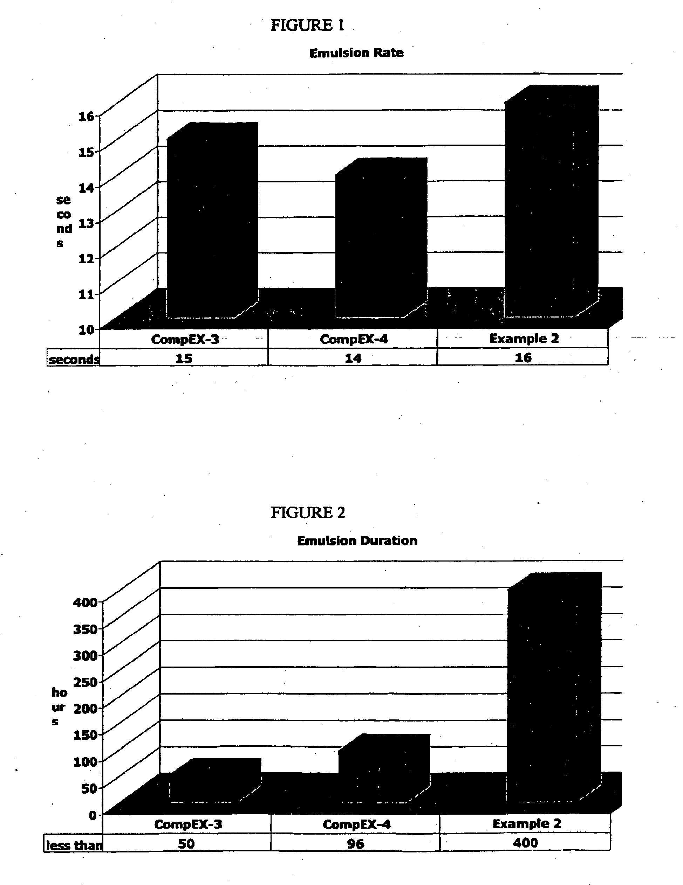

To gauge the emulsification effect of the surfactant prepared in Example 1 and the surfactant used in Comparative Examples 3 and 4, the ingredients listed in Table 1, excluding the MDI were placed in a container and blended at 1500 rpms. The time necessary to achieve a homogeneous emulsion, judged as a uniform appearance, was recorded and is displayed in Figure 1. The time varied from 14 to 16 seconds and was not significantly different between repeated trials or between Example 2 and Comparative Examples 3 and 4. The emulsions were then placed into clear bottles and observed for separation. Separation is defined as the time interval for the first observation of any phase separation of the components, which was recorded and is presented in Figure 2. As indicated by the data in Figure 2, the emulsion duration of Example 2 is significantly longer than that of Comparative Examples 3 and 4.

Evaluation of the physical properties of polyurethane foam prepared from the polyurethane foam-forming formulation of Table 1 containing the silicone copolymer surfactants used in Comparative Example 2 and prepared in Example 1 was conducted by preparing foam samples in a 15"x15"x 4" mold using the surfactants of the examples at the same use level. The result are presented in Table 2.

**TABLE 2**

| | | Comparative Example 1 | Example 1 |
|---|---|---|---|
| Density (lbs./ft³) | | | |
| | Total | 2.05 | 2.05 |
| | Core | 2.0 | 2.0 |
| k-Factor (BTU•In/hr•ft²•°F @ 75°F mean) | | 0.165 | 0.170 |
| Compressive Strength (psi) | | | |
| | Parallel | 27 | 30 |
| | Perpendicular | 18 | 23 |

The data presented in Table 2 indicates that Example 2, which contained silicone copolymer surfactant containing both EO and EO/PO pendant groups, had increased duration of the polyurethane foam-forming composition (i.e., emulsion) without affecting the physical properties of the foam. This is extremely valuable to the manufacturer of polyurethane foam in that it allows for improved processability and extended master-batch shelf life.

## Claims

1. A silicone copolymer surfactant comprising the formula:
M*DₓD*_{y}D**_{z}M*
wherein:
M* is [R¹O(CH(CH₃)CH₂O)ₘ(CH₂CH₂O)ₙR²-]ₐ[CH₃-]₃₋ₐSiO_{1/2}
D is (CH₃)₂SiO_{2/2}
D* is [R³O(CH₂CH₂O)ₒR⁴-][CH₃]SiO_{2/2}
D** is [R⁵O(CH(CH₃)CH₂O)ₚ(CH₂CH₂O)_{q}R⁶-][CH₃-]SiO_{2/2}
each occurrence of R¹, R³ and R⁵ is independently selected from the group consisting of hydrogen, monovalent hydrocarbon group of from 1 to 12 carbon atoms, R⁷₃Si- and R⁷(C=O)- group wherein R⁷ is a monovalent hydrocarbon from 1 to 18 carbon atoms;
each occurrence of R², R⁴ and R⁶ is a divalent hydrocarbon containing from 1 to 12 carbon atoms;
each occurrence of a, m, n, o, p, q, x, y and z is independently a = 0 to 1;
m is 0 to 200;
n is 0 to 200;
o is 1 to 200;
p is 1 to 200;
q is 1 to 200;
x is 1 to 100;
y is 1 to 50, and
z is 1 to 50,
with the proviso that at least one R³ and at least one R⁵ is hydrogen.

2. The silicone copolymer surfactant of Claim 1, wherein
each occurrence of R³ and R⁵ is independently hydrogen;
each occurrence of R², R⁴ and R⁶ is a divalent alkylene containing from 2 to 6 carbon atoms;
a is 0;
o is 5 to 25;
p is 5 to 50;
q is 5 to 50;
x is preferably from 10 to 85;
y is 1 to 10; and
z is 1 to 10.

3. A process for providing a silicone copolymer surfactant of Claim 1 or 2, wherein the silicone copolymer surfactant is obtained by reacting at least one poly(oxyethyleneoxypropylene) polyether and at least one poly(oxyethylene) polyether, each of the polyethers possessing a single terminal olefinic group and a single hydroxyl group with a hydrosiloxane possessing at least two pendent SiH groups under hydrosilation reaction conditions, the ratio of olefinic groups to SiH groups ranging from 1.0 to 1.3.

4. A polyurethane-foam forming composition comprising:
a) at least one polyol;
b) at least one polyisocyanate;
c) at least one polyurethane catalyst;
d) at least one blowing agent;
e) an emulsifying amount of at least one silicone copolymer surfactant as defined in claim 1 or 2; and
f) optionally, at least one additional component selected from the group consisting of other polymer and/or copolymer, chain extender, crosslinker, nonaqueous blowing agent, filler, reinforcement, pigment, tint, dye, colorant, flame retardant, antioxidant, antiozonant, UV stabilizer, anti-static agent, biocide and biostat.

5. The composition of Claim 4 wherein the polyol (a) is at least one selected from the group consisting of polyether polyol, polyester polyol, polycaprolactone polyol, polycarbonate polyol, polybutadiene polyol, hydroxyl-terminated polyolefin polyols, grafted polyol and polyols derived from a natural source.

6. The composition of Claim 5, wherein the grafted polyol component (a) is at least one selected from the group consisting of styrene/acrylonitrile (SAN) grafted polyether polyol, acrylonitrile (AN)-grafted polyether polyol and grafted polyester polyols.

7. The composition of Claim 5, wherein the polyol component (a) is at least one selected from the group consisting of polyether-terminated polybutadiene and polyether-terminated polyols derived from a natural source.

8. The composition of any one of claims 4 to 7, wherein the polyisocyanate (b) is at least one selected from the group consisting of methanediphenyl diisocyanate (MDI), polymeric MDI, modified MDI, prepolymers of MDI, toluenediisocyanate (TDI), prepolymers of TDI and modified TDI.

9. The composition of Claim 8, wherein polyisocyanate (b) is at least one selected from the group consisting of 4,4'-methanediphenyl diisocyanate, 2,4'-methanediphenyl diisocyanate, 2,2'-methanediphenyl diisocyanate, 2,4-toluenediisocyanate, and 2,6-toluene diisocyanate.

10. The composition of any one of claims 4 to 9, wherein the catalyst is at least one selected from the group consisting of organometallic catalysts, alkali metal carboxylates catalysts, heavy metal-based catalysts and tertiary amine urethane catalysts.

11. The composition of Claim 10, wherein the catalyst is at least one selected from the group consisting of nickelacetoacetonate, ironacetoacetonate, tin-based catalysts, bismuth-based catalysts, zinc-based catalysts, potassium octoate, potassium acetate, sodium acetate, sodium octoate, mercury, lead, triethylene diamine and quaternary ammonium carboxylate.

12. The composition of any one of claims 4 to 11, wherein the polyurethane foam-forming composition comprises
from 10 to 85 weight percent polyol (a),
from 20 to 80 weight percent polyisocyanate (b),
from 0.1 to 5.0 weight percent catalyst (c),
from 0.1 to 15.0 weight percent blowing agent (d), and
from 0.1 to 2.0 weight percent silicone copolymer surfactant (e).

13. The composition of Claim 12 wherein the polyurethane foam-forming composition comprises
from 30 to 75 weight percent polyol (a),
from 30 to 75 weight percent polyisocyanate (b),
from 0.5 to 4.0 weight percent catalyst (c),
from 0.5 to 13.0 weight percent blowing agent (d), and
from 0.5 to 1.5 weight percent silicone copolymer surfactant (e).

14. The composition of Claim 13 wherein the polyurethane foam-forming composition comprises
from 35 to 65 weight percent polyol (a),
from 35 to 70 weight percent polyisocyanate (b),
from 0.8 to 3.5 weight percent catalyst (c),
from 0.5 to 12.0 weight percent blowing agent (d), and
from 0.75 to 1.25 weight percent silicone copolymer surfactant (e).

15. A process for manufacturing a polyurethane foam comprising the step of reacting at least one polyol with at least one polyisocyanate and emulsifying amount of at least one silicone copolymer surfactant as defined in claim 1 or 2 in the presence of a blowing agent and under conditions sufficient to form the polyurethane foam.

## Patentansprüche

1. Siliconcopolymer-Tensid mit der folgenden Formel:
M*DₓD*_{y}D**_{z}M*
worin
M* für [R¹O(CH(CH₃)CH₂O)ₘ(CH₂CH₂O)ₙR²-]ₐ[CH₃-]₃₋ₐSiO_{1/2} steht;
D für (CH₃)₂SiO_{2/2} steht;
D* für [R³O(CH₂CH₂O)ₒR⁴-][CH₃]SiO_{2/2} steht;
D** für [R⁵O(CH(CH₃)CH₂O)ₚ(CH₂CH₂O)_{q}R⁶-][CH₃-]SiO_{2/2} steht;
jedes Vorkommen von R¹, R³ und R⁵ ist unabhängig voneinander ausgewählt aus der aus Wasserstoff, einwertigem Kohlenwasserstoff mit 1 bis 12 Kohlenstoffatomen, R⁷₃Si- und R⁷(C=O)- bestehenden Gruppe, worin R⁷ ein einwertiger Kohlenwasserstoff mit 1 bis 18 Kohlenstoffatomen ist;
jedes Vorkommen von R², R⁴ und R⁶ ist ein zweiwertiger Kohlenwasserstoff, der von 1 bis 12 Kohlenstoffatome enthält;
jedes Vorkommen von a, m, n, o, p, q, x, y und z ist unabhängig voneinander:
a = 0 bis 1;
m ist 0 bis 200;
n ist 0 bis 200;
o ist 1 bis 200;
p ist 1 bis 200;
q ist 1 bis 200;
x ist 1 bis 100;
y ist 1 bis 50, und
z ist 1 bis 50,
mit der Maßgabe, dass mindestens ein R³ und mindestens ein R⁵ Wasserstoff ist.

2. Siliconcopolymer-Tensid nach Anspruch 1, wobei
jedes Vorkommen von R³ und R⁵ unabhängig voneinander Wasserstoff ist; jedes Vorkommen von R², R⁴ und R⁶ ein zweiwertiges Alkylen ist, das von 2 bis 6 Kohlenstoffatome enthält;
a ist 0;
o ist 5 bis 25;
p ist 5 bis 50;
q ist 5 bis 50;
x ist vorzugsweise von 10 bis 85;
y ist 1 bis 10; und
z ist 1 bis 10.

3. Verfahren zur Bereitstellung eines Siliconcopolymer-Tensids nach Anspruch 1 oder 2, wobei man das Siliconcopolymer-Tensid erhält, indem mindestens ein Poly(oxyethylenoxypropylen)polyether und mindestens ein Poly(oxyethylen)polyether, von denen jeder eine einzige endständige olefinische Gruppe und eine einzige Hydroxylgruppe besitzt, unter Hydrosilylierungsbedingungen mit einem Hydrosiloxan umgesetzt werden, das mindestens zwei SiH-Seitengruppen besitzt, wobei das Verhältnis olefinischer Gruppen zu SiH-Gruppen im Bereich von 1,0 bis 1,3 liegt.

4. Polyurethanschaum bildende Zusammensetzung, umfassend:
a) mindestens ein Polyol;
b) mindestens ein Polyisocyanat;
c) mindestens einen Polyurethankatalysator;
d) mindestens ein Treibmittel;
e) eine emulgierende Menge von mindestens einem Siliconcopolymer-Tensid nach Anspruch 1 oder 2; und
f) optional mindestens eine weitere Komponente, die aus der aus einem weiteren Polymer und/oder Copolymer, einem Kettenverlängerer, Vernetzer, nicht-wässrigen Treibmittel, Füllstoff, Verstärker, Pigment, Tönungsmittel, Farbstoff, Farbmittel, Flammschutzmittel, Antioxidans, Antiozonans, UV-Stabilisator, Antistatikmittel, Biozid und Biostatikum bestehenden Gruppe ausgewählt ist.

5. Zusammensetzung nach Anspruch 4, wobei das Polyol (a) mindestens eines ist, das aus der aus Polyetherpolyol, Polyesterpolyol, Polycaprolactonpolyol, Polycarbonatpolyol, Polybutadienpolyol, hydroxylterminierten Polyolefinpolyolen, gepfropftem Polyol und aus einer natürlichen Quelle stammenden Polyolen bestehenden Gruppe ausgewählt ist.

6. Zusammensetzung nach Anspruch 5, wobei die gepfropfte Polyolkomponente (a) mindestens eine ist, die aus der aus mit Styrol/Acrylnitril (SAN) gepfropftem Polyetherpolyol, mit Acrylnitril (AN) gepfropftem Polyol und gepfropften Polyesterpolyolen bestehenden Gruppe ausgewählt ist.

7. Zusammensetzung nach Anspruch 5, wobei die Polyolkomponente (a) mindestens eine ist, die aus der aus polyetherterminiertem Polybutadien und polyetherterminierten Polyolen aus einer natürlichen Quelle bestehenden Gruppe ausgewählt ist.

8. Zusammensetzung nach einem der Ansprüche 4 bis 7, wobei das Polyisocyanat (b) mindestens eines ist, das aus der aus Methandiphenyldüsocyanat (MDI), polymerem MDI, modifiziertem MDI, Vorpolymeren von MDI, Toluoldiisocyanat (TDI), Vorpolymeren von TDI und modifiziertem TDI bestehenden Gruppe ausgewählt ist.

9. Zusammensetzung nach Anspruch 8, wobei Polyisocyanat (b) mindestens eines ist, das aus der aus 4,4'-Methandiphenyldiisocyanat, 2,4'-Methandiphenyldiisocyanat, 2,2'-Methandiphenyldiisocyanat, 2,4-Toluoldiisocyanat und 2,6-Toluoldiisocyanat bestehenden Gruppe ausgewählt ist.

10. Zusammensetzung nach einem der Ansprüche 4 bis 9, wobei der Katalysator mindestens einer ist, der aus der aus metallorganischen Katalysatoren, Alkalimetallcarboxylat-Katalysatoren, schwermetallbasierten Katalysatoren und Katalysatoren auf Basis von tertiärem Aminurethan bestehenden Gruppe ausgewählt ist.

11. Zusammensetzung nach Anspruch 10, wobei der Katalysator einer ist, der aus. der aus Nickelacetoacetonat, Eisenacetoacetonat, zinnbasierten Katalysatoren, wismuthbasierten Katalysatoren, zinkbasierten Katalysatoren, Kaliumoctoat, Kaliumacetat, Natriumacetat, Natriumoctoat, Quecksilber, Blei, Triethylendiamin und quartärem Ammoniumcarboxylat bestehenden Gruppe ausgewählt ist.

12. Zusammensetzung nach einem der Ansprüche 4 bis 11, wobei die Polyurethanschaum bildende Zusammensetzung Folgendes umfasst:
von 10 bis 85 Gew.-% Polyol (a),
von 20 bis 80 Gew.-% Polyisocyanat (b),
von 0,1 bis 5,0 Gew.-% Katalysator (c),
von 0,1 bis 15,0 Gew.-% Treibmittel (d), und
von 0,1 bis 2,0 Gew.-% Siliconcopolymer-Tensid (e).

13. Zusammensetzung nach Anspruch 12, wobei die Polyurethanschaum bildende Zusammensetzung Folgendes umfasst:
von 30 bis 75 Gew.-% Polyol (a),
von 30 bis 75 Gew.-% Polyisocyanat (b),
von 0,5 bis 4,0 Gew.-% Katalysator (c),
von 0,5 bis 13,0 Gew.-% Treibmittel (d), und
von 0,5 bis 1,5 Gew.-% Siliconcopolymer-Tensid (e).

14. Zusammensetzung nach Anspruch 13, wobei die Polyurethanschaum bildende Zusammensetzung Folgendes umfasst:
von 35 bis 65 Gew.-% Polyol (a),
von 35 bis 70 Gew.-% Polyisocyanat (b),
von 0,8 bis 3,5 Gew.-% Katalysator (c),
von 0,5 bis 12,0 Gew.-% Treibmittel (d), und
von 0,75 bis 1,25 Gew.-% Siliconcopolymer-Tensid (e).

15. Verfahren zur Herstellung eines Polyurethanschaums, bei dem mindestens ein Polyol mit mindestens einem Polyisocyanat und einer emulgierenden Menge mindestens eines Siliconcopolymer-Tensids nach Anspruch 1 oder 2 in Gegenwart eines Treibmittels unter Bedingungen umgesetzt wird, die ausreichen, um den Polyurethanschaum zu bilden.

## Revendications

1. Tensioactif en copolymère de silicone comprenant la formule :
M*DₓD*_{y}*D**_{z}M*
dans laquelle :
M* est [R¹O(CH(CH₃)CH₂O)ₘ(CH₂CH₂O)ₙR²-]ₐ[CH₃-]₃₋ₐSiO_{1/2}
D est (CH₃)₂SiO_{2/2}
D* est [R³O(CH₂CH₂O)ₒR⁴-][CH₃]SiO_{2/2}
D** est [R⁵O(CH(CH₃)CH₂O)ₚ(CH₂CH₂O)_{q}R⁶-][CH₃-]SiO_{2/2}
chaque occurrence de R¹, R³ et R⁵ est choisie indépendamment dans le groupe constitué par l'hydrogène, l'hydrocarbure monovalent de 1 à 12 atomes de carbone, un groupe R⁷₃Si- et R⁷(C=O)- dans lequel R⁷ est un hydrocarbure monovalent de 1 à 18 atomes de carbone ;
chaque occurrence de R², R⁴ et R⁶ est un hydrocarbure divalent contenant de 1 à 12 atomes de carbone ;
chaque occurrence de a, m, n, o, p, q, x, y et z est indépendamment
a vaut 0 à 1 ;
m vaut 0 à 200 ;
n vaut 0 à 200 ;
o vaut 1 à 200 ;
p vaut 1 à 200 ;
q vaut 1 à 200 ;
x vaut 1 à 100 ;
y vaut 1 à 50 et
z vaut 1 à 50,
à la condition qu'au moins un R³ et au moins un R⁵ soient de l'hydrogène.

2. Tensioactif en copolymère de silicone selon la revendication 1, dans lequel chaque occurrence de R³ et de R⁵ est indépendamment un hydrogène ; chaque occurrence de R², R⁴ et R⁶ est un alkylène divalent contenant de 2 à 6 atomes de carbone ;
a vaut 0 ;
o vaut 5 à 25 ;
p vaut 5 à 50 ;
q vaut 5 à 50 ;
x vaut de préférence de 10 à 85 ;
y vaut 1 à 10 ; et
z vaut 1 à 10.

3. Procédé pour fournir un tensioactif en copolymère de silicone selon la revendication 1 ou 2, dans lequel le tensioactif en copolymère de silicone est obtenu par réaction d'au moins un polyéther de poly(oxyéthylèneoxypropylène) et d'au moins un polyéther de poly(oxyéthylène), chacun des polyéthers possédant un seul groupe oléfinique terminal et un seul groupe hydroxyle avec un hydrosiloxane possédant au moins deux groupes pendants SiH dans des conditions réactionnelles d'hydrosilylation, le rapport de groupes oléfiniques aux groupes SiH se situant dans la plage allant de 1,0 à 1,3.

4. Composition formant une mousse de polyuréthane comprenant :
a) au moins un polyol ;
b) au moins un polyisocyanate ;
c) au moins un catalyseur de polyuréthane ;
d) au moins un agent gonflant ;
e) une quantité émulsifiante d'au moins un tensioactif en copolymère de silicone comme défini dans la revendication 1 ou 2 ; et
f) éventuellement, au moins un composant supplémentaire choisi dans le groupe constitué par un autre polymère et/ou copolymère, un extenseur de chaîne, un agent de réticulation, un agent gonflant non aqueux, une charge, un renforcement, un pigment, une teinte, une couleur, un colorant, un retardateur de flamme, un anti-oxydant, un anti-ozonant, un stabilisateur aux UV, un agent anti-statique, un biocide et un biostat.

5. Composition selon la revendication 4 dans laquelle le polyol (a) est au moins un choisi dans le groupe constitué par le polyéther polyol, le polyester polyol, le polycaprolactone polyol, le polycarbonate polyol, le polybutadiène polyol, des polyoléfines polyols terminés par un hydroxyle, un polyol greffé et les polyols dérivés d'une source naturelle.

6. Composition selon la revendication 5, dans laquelle le composant de polyol greffé (a) est au moins un choisi dans le groupe constitué par le polyéther à greffe styrène/acrylonitrile (SAN) polyol, le polyéther à greffe acrylonitrile (AN) polyol et les polyester greffé polyols.

7. Composition selon la revendication 5, dans laquelle le composant polyol (a) est au moins un choisi dans le groupe constitué par le polybutadiène terminé par un polyéther et les polyols terminés par un polyéther dérivés d'une source naturelle.

8. Composition selon l'une quelconque des revendications 4 à 7, dans laquelle le polyisocyanate (b) est au moins un choisi dans le groupe constitué par le méthanediphényl diisocyanate (MDI), le MDI polymère, le MDI modifié, les prépolymères de MDI, le toluènediisocyanate (TDI), les prépolymères de TDI et le TDI modifié.

9. Composition selon la revendication 8, dans laquelle le polyisocyanate (b) est au moins un choisi dans le groupe constitué par le 4,4'-méthanediphényl diisocyanate, le 2,4'-méthanediphényl diisocyanate, le 2,2'-méthanediphényl diisocyanate, le 2,4-toluènediisocyanate et le 2,6-toluène diisocyanate.

10. Composition selon l'une quelconque des revendications 4 à 9, dans laquelle le catalyseur est au moins un choisi dans le groupe constitué par les catalyseurs organométalliques, les catalyseurs carboxylates de métal alcalin, les catalyseurs à base de métal lourd et les catalyseurs uréthane d'amine tertiaire.

11. Composition selon la revendication 10, dans laquelle le catalyseur est au moins un choisi dans le groupe constitué par le nickelacétoacétonate, le feracétoacétonate, les catalyseurs à base d'étain, les catalyseurs à base de bismuth, les catalyseurs à base de zinc, l'octoate de potassium, l'acétate de potassium, l'acétate de sodium, l'octoate de sodium, le mercure, le plomb, la triéthylène diamine et le carboxylate d'ammonium quaternaire.

12. Composition selon l'une quelconque des revendications 4 à 11, dans laquelle la composition formant une mousse de polyuréthane comprend :
de 10 à 85 pour cent en poids de polyol (a),
de 20 à 80 pour cent en poids de polyisocyanate (b),
de 0,1 à 5,0 pour cent en poids de catalyseur (c),
de 0,1 à 15,0 pour cent en poids d'agent gonflant (d), et
de 0,1 à 2,0 pour cent en poids de tensioactif en copolymère de silicone (e).

13. Composition selon la revendication 12, dans laquelle la composition formant une mousse de polyuréthane comprend :
de 30 à 75 pour cent en poids de polyol (a),
de 30 à 75 pour cent en poids de polyisocyanate (b),
de 0,5 à 4,0 pour cent en poids de catalyseur (c),
de 0,5 à 13,0 pour cent en poids d'agent gonflant (d), et
de 0,5 à 1,5 pour cent en poids de tensioactif en copolymère de silicone (e).

14. Composition selon la composition 13, dans laquelle la composition formant une mousse de polyuréthane comprend :
de 35 à 65 pour cent en poids de polyol (a),
de 35 à 70 pour cent en poids de polyisocyanate (b),
de 0,8 à 3,5 pour cent en poids de catalyseur (c),
de 0,5 à 12,0 pour cent en poids d'agent gonflant (d), et
de 0,75 à 1,25 pour cent en poids de tensioactif en copolymère de silicone (e).

15. Procédé de fabrication d'une mousse de polyuréthane comprenant l'étape de réaction d'au moins un polyol avec au moins un polyisocyanate et une quantité émulsifiante d'au moins un tensioactif en copolymère de silicone tel que défini dans la revendication 1 ou 2 en présence d'un agent gonflant et dans des conditions suffisantes pour former la mousse de polyuréthane.
